# FASCICULE DE BREVET EUROPEEN

(11) **EP 2 808 964 B1**
(45) Date de publication et mention de la délivrance du brevet: **04.11.2015**
(21) Numéro de dépôt: 14169720.1
(22) Date de dépôt: 23.05.2014
(51) Int. Cl.: H02G 3/34

(54) **Système pour fournir un support horizontal à un objet tel qu'un chemin de câbles et rail pour un tel système**
System, das als waagrechte Halterung für einen Gegenstand wie einen Kabelkanal dienen soll, und Schiene für ein solches System
System for providing a horizontal mounting for an object such as a cable trough and rail for such a system

(30) Priorité: 31.05.2013 FR 1354987
(43) Date de publication de la demande: 03.12.2014
(73) Titulaire: Legrand France, 87000 Limoges (FR); Legrand SNC, 87000 Limoges (FR)
(72) Inventeur: GREVÊCHE, Cécile, 53600 CHÂTRES LA FORÊT (FR)
(74) Mandataire: Santarelli

(56) Documents cités:
- FR-A1- 2 757 696
- FR-A1- 2 812 927

## Description

### DOMAINE DE L'INVENTION

L'invention a trait aux éléments porteurs servant à fournir un support à un objet tel qu'un chemin de câbles.

### ARRIÈRE-PLAN TECHNOLOGIQUE

On sait que pour fournir un support horizontal à un objet tel qu'un chemin de câbles, l'on peut utiliser un système comportant un rail porteur et une console présentant une portion configurée pour former ledit support horizontal lorsqu'elle est fixée au rail porteur lui même fixé verticalement sur une structure telle qu'un mur.

En général, le rail porteur comporte au moins une paroi présentant une série d'ouvertures disposées le long du rail selon un pas régulier, chaque ouverture étant configurée pour recevoir un organe mâle de fixation de la console.

Dans certains systèmes rail porteur-console, les ouvertures ont un contour circulaire et les organes mâles de fixation comportent un corps à section circulaire. Un tel système, dans lequel l'organe mâle de fixation est une vis, est décrit notamment par la demande de brevet français 2 757 696.

Dans d'autres systèmes, les ouvertures du rail présentent un contour rectangulaire, les organes mâles de fixation étant des griffes présentant une surface d'appui, sur le côté inférieur de l'ouverture, qui est plate. Un tel système est décrit notamment par la demande de brevet français 2 812 927.

L'invention vise à fournir des systèmes du même genre, mais plus commodes et plus économiques.

L'invention propose à cet effet un système pour fournir un support horizontal à un objet tel qu'un chemin de câbles, comportant un rail porteur et une console présentant une portion configurée pour former ledit support horizontal lorsqu'elle est fixée audit rail porteur lui-même fixé verticalement sur une structure telle qu'un mur, ledit rail porteur comportant une paroi présentant une série d'ouvertures disposées le long dudit rail selon un pas régulier, chaque dite ouverture étant configurée pour recevoir un organe mâle de fixation de ladite console comportant une surface d'appui, sur le pourtour de l'ouverture du rail, qui est à section circulaire de diamètre prédéterminé ; caractérisé en ce que :
- ledit système comporte des dits organes mâles de fixation, appelés ci-après premiers organes mâles de fixation, pour des premières dites consoles et des deuxièmes organes mâles de fixation, pour des deuxièmes dites consoles ;
- chaque dit deuxième organe mâle de fixation présente une surface d'appui, sur le pourtour de l'ouverture du rail, qui est plate de longueur prédéterminée ; et
- chaque dite ouverture du rail présente un contour comportant un premier côté et un deuxième côté chacun orienté transversalement à la direction générale du rail, le premier côté et le deuxième côté étant en regard l'un de l'autre et comportant chacun un segment incurvé concave et deux segments disposés de part et d'autre du segment incurvé concave, le segment incurvé concave du premier côté et le segment incurvé concave du deuxième côté suivant chacun un arc d'un même cercle ayant ledit diamètre prédéterminé, les segments du premier côté disposés de part et d'autre du segment incurvé concave étant droits et alignés, avec le premier côté qui a une longueur au moins égale à ladite longueur prédéterminée, grâce à quoi chaque dite ouverture du rail peut recevoir aussi bien un dit premier organe mâle de fixation qu'un dit deuxième organe mâle de fixation.

Lorsqu'une ouverture du rail porteur reçoit un premier organe mâle de fixation, la surface d'appui de cet organe est au contact du segment incurvé concave du premier côté et du segment incurvé concave du deuxième côté.

Lorsqu'une ouverture reçoit un deuxième organe mâle de fixation, sa surface d'appui est au contact du premier côté, et plus précisément des segments du premier côté disposé de part et d'autre du segment incurvé concave.

Ainsi, ni le premier organe mâle de fixation ni le deuxième organe mâle de fixation ne coopère avec le pourtour des ouvertures de la même façon qu'avec les ouvertures circulaires ou avec les ouvertures rectangulaires des rails porteurs antérieurs.

En effet, dans le rail porteur antérieur à ouvertures circulaires, le contact s'effectue sur la totalité du pourtour de l'ouverture ; et dans le rail porteur antérieur à ouvertures rectangulaires, le contact s'effectue sur la totalité de la surface d'appui de l'organe mâle de fixation.

Même si cela peut paraître surprenant, il se trouve que le contact seulement partiel du premier organe mâle de fixation ou du deuxième organe mâle de fixation avec le pourtour de l'ouverture du rail, suffit pour permettre aux organes mâles de fixation de jouer leur rôle, y compris pour permettre la reprise par le rail porteur des efforts s'exerçant sur la première console ou sur la deuxième console.

En proposant un même rail porteur qui convient pour la première console et pour la deuxième console, le système selon l'invention est bien plus commode et économique que les deux systèmes antérieurs conventionnels comportant chacun un rail porteur et une console spécifiques l'un à l'autre.

Selon des caractéristiques avantageuses du système selon l'invention :
- chaque dite ouverture comporte également un troisième côté et un quatrième côté chacun orienté suivant la direction générale du rail, le troisième côté et le quatrième côté étant en regard l'un de l'autre, avec le troisième côté qui s'étend entre une extrémité du premier côté et une extrémité du deuxième côté et avec le quatrième côté qui s'étend entre l'autre extrémité du premier côté et l'autre extrémité du deuxième côté ;
- dans ledit deuxième côté, les deux segments disposés de part et d'autre du segment incurvé concave sont droits et alignés ; -
- le système comporte pour chaque dite première console, deux dits premiers organes mâles de fixation distants d'un multiple n du pas entre lesdites ouvertures dudit rail tandis qu'il comporte pour chaque dite deuxième console deux dits organes mâles de fixation distants l'un de l'autre d'un multiple m du pas entre lesdites ouvertures dudit rail porteur, avec ledit multiple n qui est différent dudit multiple m ;
- ledit multiple n est égal à 3 et ledit multiple m est égal à 2 ;
- ladite première console comporte deux flasques chacun muni d'une ouverture de réception d'un dit premier organe mâle de fixation ; avec le rail porteur et la première console qui sont configurés pour que le rail porteur puisse s'engager entre lesdits flasques et que chaque dite ouverture de chaque flasque soit alignée avec une dite ouverture du rail porteur ; et/ou
- ladite deuxième console comporte deux dits deuxièmes organes mâles de fixation qui sont à section en L avec une première paroi et une deuxième paroi disposées transversalement l'une par rapport à l'autre, ladite surface d'appui étant formée par la surface de ladite première paroi située du côté de ladite deuxième paroi, la deuxième console et le rail porteur étant configurés pour être fixés l'un à l'autre avec ladite première paroi qui passe au travers d'une dite ouverture du rail porteur et la deuxième paroi qui est en regard de la face interne de ladite paroi du rail porteur présentant lesdites ouvertures.

L'invention vise également, sous un deuxième aspect, un rail porteur convenant au système tel qu'exposé ci-dessus, comportant une paroi présentant une série d'ouvertures disposées le long dudit rail selon un pas régulier, chaque dite ouverture étant configurée pour recevoir un organe mâle de fixation d'une console comportant une surface d'appui, sur le pourtour de l'ouverture du rail, qui est à section circulaire de diamètre prédéterminé ; caractérisé en ce que chaque dite ouverture dudit du rail présente un contour comportant un premier côté et un deuxième côté chacun orienté transversalement à la direction générale du rail, le premier côté et le deuxième côté étant en regard l'un de l'autre et comportant chacun un segment incurvé concave et deux segments disposés de part et d'autre du segment incurvé concave, le segment incurvé concave du premier côté et le segment incurvé concave du deuxième côté suivant chacun un arc d'un même cercle ayant ledit diamètre prédéterminé, les segments du premier côté disposés de part et d'autre du segment incurvé concave étant droits et alignés, grâce à quoi chaque dite ouverture du rail peut recevoir aussi bien un premier organe mâle de fixation comportant une surface d'appui, sur le pourtour de l'ouverture du rail, qui est à section circulaire dudit diamètre prédéterminé, qu'un deuxième organe mâle de fixation présentant une surface d'appui, sur le pourtour de l'ouverture du rail, qui est plate.

Selon des caractéristiques avantageuses du rail porteur selon l'invention :
- il comporte deux dites parois présentant une dite série d'ouverture, chaque ouverture de l'une des dites paroi étant alignée avec une ouverture de l'autre paroi ; et optionnellement
- il est formé par un profilé métallique à section en U comportant un fond et lesdites deux parois chacune raccordée par un côté longitudinal à un côté longitudinal respectif dudit fond.

### BRÈVE DESCRIPTION DES DESSINS

L'exposé de l'invention sera maintenant poursuivi par la description détaillée d'exemples de réalisation, donnée ci-après à titre illustratif et non limitatif, en référence aux dessins annexés, sur lesquels :
- la figure 1 est une vue en perspective d'un système conforme à l'invention, comportant un rail porteur et deux consoles différentes pouvant être fixées sur ce rail porteur, les organes mâles de fixation de l'une des consoles étant des goupilles et les organes mâles de fixation de l'autre console étant des griffes ;
- la figure 2 est une vue semblable à la figure 1, mais avec les deux consoles qui sont fixées chacune sur le rail porteur ;
- la figure 3 est une vue en élévation prise depuis le côté situé à droite de la figure 2 ;
- la figure 4 est une vue en coupe, prise suivant le plan repéré par IV-IV sur la figure 3 ;
- les figures 5, 6 et 7 sont des agrandissements des détails repérés respectivement par V, VI et VII sur la figure 4 ;
- la figure 8 est une vue en perspective d'une variante du rail porteur ; et
- la figure 9 est une vue en plan, prise depuis le haut de la figure 8, de cette variante du rail porteur.

### DESCRIPTION DÉTAILLÉE D'EXEMPLES DE RÉALISATION

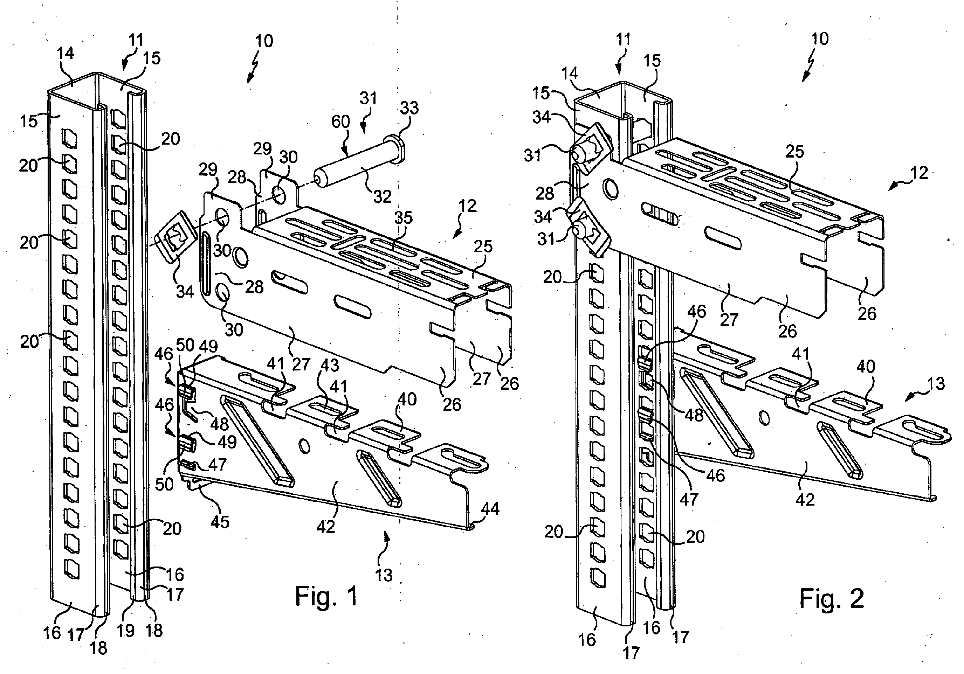

Le système 10 montré sur les figures 1 à 4 comporte un rail porteur 11, une première console 12 et une deuxième console 13.

Le rail porteur 11 est un élément métallique profilé, ici à section en forme de U, comportant un fond 14 et deux ailes latérales 15 chacune raccordée par un côté longitudinal à un côté longitudinal respectif du fond 14.

Les ailes latérales 15 sont en regard l'une de l'autre et ont chacune une conformation qui est l'image miroir de la conformation de l'autre aile latérale 15.

Ici, chaque aile latérale 15 comporte une paroi latérale 16 et un retour 17 à section en L comportant un rebord 18 et un bord tombé 19.

Pour chaque aile latérale 15 :
- la paroi latérale 16 s'étend entre le fond 14 et le retour 17, et plus précisément entre le fond 14 et le rebord 18 du retour 17 ;
- chaque rebord 18 est en regard du fond 14 et s'étend entre le bord tombé 19 et la paroi latérale 16 ; et
- chaque bord tombé 19 est, du côté externe, en regard de la paroi latérale 16 et, du côté interne, en regard du bord tombé 19 de l'autre aile latérale 15.

Le rail porteur 11 est prévu pour être fixé verticalement sur une structure telle qu'un mur.

Le fond 14 présente des ouvertures pour le passage d'un organe de fixation tel qu'une vis. Pour simplifier les dessins, les ouvertures ménagées dans le fond 14 ne sont pas illustrées.

Chaque paroi latérale 16 présente une série d'ouvertures 20 disposées le long du rail 11 selon un pas régulier.

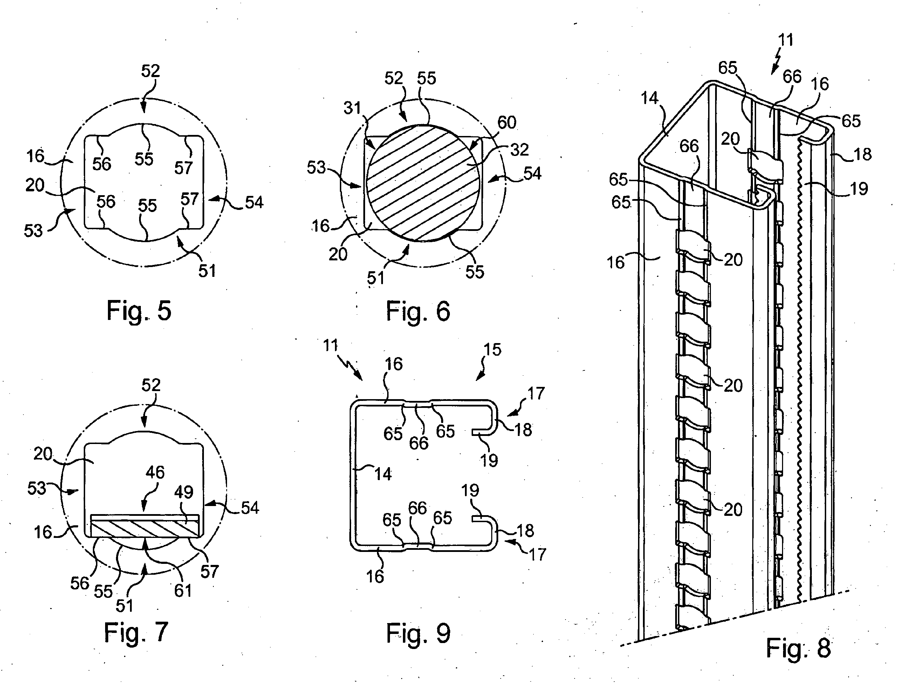

Les ouvertures 20 ont toutes le même contour, qui sera décrit ultérieurement en détail à l'appui de la figure 5.

Chaque ouverture 20 d'une aile latérale 15 est alignée avec une ouverture 20 de l'autre aile latérale 15 suivant une direction transversale à l'orientation générale du rail 11, ici une direction parallèle au fond 14 et transversale aux parois latérales 16.

Chacune des ouvertures 20 est configurée pour recevoir aussi bien un organe mâle de fixation de la première console 12 qu'un organe mâle de fixation de la deuxième console 13.

La première console 12 comporte une portion configurée pour former un support horizontal pour un objet tel qu'un chemin de câbles lorsqu'elle est fixée au rail porteur 11 lui même fixé verticalement sur une structure telle qu'un mur. Il en va de même pour la deuxième console 13.

Dans la première console 12, la portion permettant de fournir un support horizontal à un objet tel qu'un chemin de câbles, est une paroi de support 25 globalement rectangulaire.

En outre de la paroi de support 25, la première console 12 comporte deux ailes latérales 26 chacune raccordée par un côté longitudinal à un côté longitudinal respectif de la paroi de support 25. Les ailes latérales 26 sont en regard l'une de l'autre et ont chacune une conformation qui est l'image miroir de la conformation de l'autre aile latérale 26.

Ici, chaque aile latérale 26 comporte une joue 27 et un flasque 28.

Pour chaque aile latérale 26 :
- la joue 27 est disposée transversalement à la paroi de support 25 et s'étend sur toute la longueur de la paroi de support 25 ; et
- le flasque 28 prolonge la joue 27 au-delà du côté transversal de la paroi de support 25 que l'on voit à gauche sur les figures 1, 2 et 4 tandis qu'il forme une languette 29 en débord par rapport à la paroi de support 25.

Chaque flasque 28 présente deux ouvertures 30 ayant chacune un contour circulaire de même diamètre prédéterminé. Chaque ouverture 30 d'un flasque 28 est alignée avec une ouverture 30 de l'autre flasque 28 suivant une direction transversale à l'orientation générale de la première console 12, ici une direction parallèle à la paroi de support 25 et transversale aux flasques 28.

La distance entre les deux ouvertures 30 de chaque flasque 28 est un multiple du pas entre les ouvertures 20 du rail 11.

Ici, la distance entre les deux ouvertures 30 de chaque flasque 28 est de trois fois le pas de la série d'ouvertures 20.

L'écart entre les faces internes des flasques 28 correspond à l'écart entre les faces externes des parois latérales 16.

Plus généralement, le rail porteur 11 et la première console 12 sont configurés pour que le rail 11 puisse s'engager entre les flasques 28 avec la face interne de chaque flasque 28 qui est en regard de la face externe d'une paroi latérale 16 respective du rail porteur 11, les retours 17 étant du côté de la paroi de support 25, ainsi que montré notamment sur la figure 2.

En jouant sur la position de la première console 12 suivant la direction longitudinale du rail porteur 11, il est possible d'aligner les ouvertures 30 des flasques 28 avec des ouvertures 20 des parois latérales 16.

Dans la position illustrée sur la figure 2, les ouvertures 30 ménagées dans les languettes 29 sont alignées avec les deux ouvertures 20 les plus élevées du rail porteur 11 tandis que les deux autres ouvertures 30 sont alignées avec la troisième ouverture 20 à partir de l'ouverture la plus élevée.

Pour fixer la première console 12 au rail porteur 11, le système 10 comporte deux goupilles 31. Sur la figure 1, pour simplifier le dessin, une seule goupille 31 est illustrée.

Chaque goupille 31 comporte un corps 32 et une tête 33. Le corps 32 est cylindrique et du même diamètre prédéterminé que les ouvertures 30.

La tête 33 est en débord du corps 32.

Ainsi qu'on le voit sur les figures 2 à 4, lorsque la première console 12 est fixée sur le rail porteur 11, une goupille 31 est engagée dans chacun des deux ensembles d'ouvertures 20 et 30 alignées.

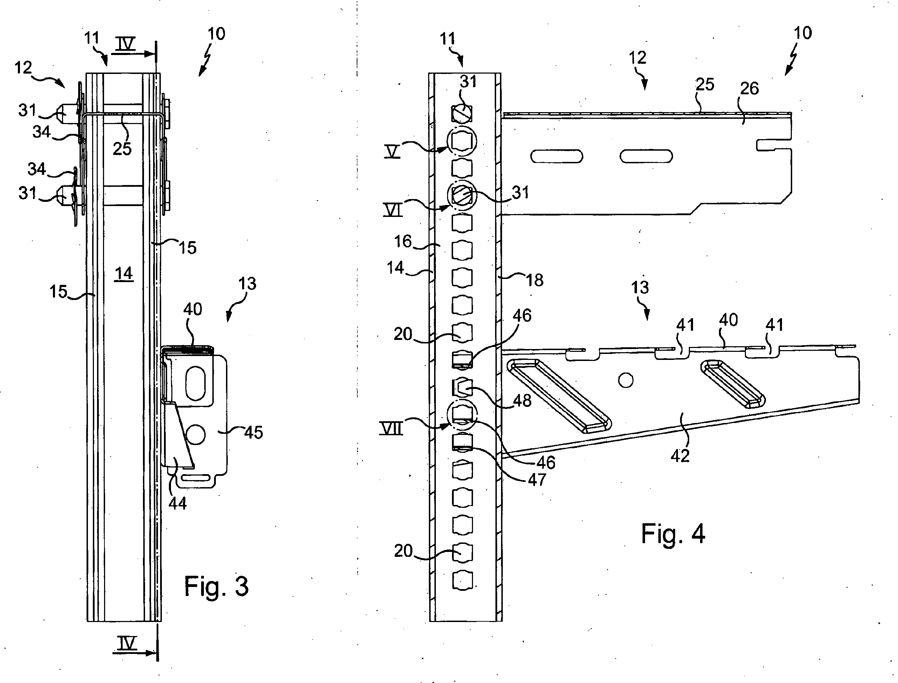

Pour verrouiller en position chaque goupille 31, le système 10 comporte une bague de verrouillage 34 comportant une denture interne conformée pour permettre le coulissement le long du corps 32 de la goupille 31 dans une seule direction, de sorte qu'une fois positionnée comme montré sur les figures 2 et 3, la bague 34 reste en place.

Des ouvertures allongées 35 sont ménagées dans la paroi 25 pour permettre de fixer l'objet tel qu'un chemin de câbles.

Dans la deuxième console 13, la portion permettant de fournir un support horizontal à un objet tel qu'un chemin de câbles, est formée par une paroi de support 40 et par des encoches 41 ménagées dans la paroi de support 40 et dans la zone de jonction entre la paroi de support 40 et une joue 42 de la deuxième console 13.

De façon bien connue (voir par exemple la demande de brevet français 2 757 696), l'objet à supporter est posé sur la paroi 40, par exemple s'il s'agit d'un chemin de câbles en tôle perforée, ou engagé dans les encoches 41, par exemple s'il s'agit d'un chemin de câbles en fils métalliques.

La paroi de support 40 présente des ouvertures allongées 43 pour permettre de fixer l'objet à supporter.

En outre de la paroi de support 40 et de la joue 42, la deuxième console 13 comporte un rebord 44 et un fond 45 (figure 3).

La joue 42 est disposée transversalement à la paroi de support 40 et s'étend sur toute la longueur de la paroi de support 40.

Le côté de la joue 42 qui est opposé à la paroi de support 40 est incliné. Le rebord 44 est disposé transversalement à la joue 42 en regard de la paroi de support 40.

Le fond 45 est disposé transversalement à la paroi de support 40 et à la joue 42 le long du côté transversal le plus grand de la joue 42, à savoir le côté que l'on voit à gauche sur les figures 1, 2 et 4.

Par rapport au plan général de la joue 42, la paroi de support 40, le rebord 44 et le fond 45 sont disposés du même côté.

Le long de son grand côté transversal, la joue 42 comporte deux griffes 46, un ergot 47 et une patte à plier 48.

La griffe 46 et l'ergot 47 saillent, par rapport au plan général de la joue 42, du côté opposé à celui où se trouve la paroi de support 40.

Les deux griffes 46 sont à section en L avec une première paroi 49 orientée transversalement au plan général de la joue 42 et une deuxième paroi 50 orientée parallèlement au plan général de la joue 52.

Chacune des griffes 46 a été formée en ménageant une découpe en forme de U puis en pliant la matière délimitée par cette découpe suivant deux plis pour former respectivement la première paroi 49 et la deuxième paroi 50.

L'ergot 47 s'étend transversalement au plan général de la joue 42. Il a été formé par une découpe puis par un pli pour l'orienter transversalement au plan général de la joue 42, parallèlement à la première paroi 49 des griffes 46.

La patte à plier 48 s'étend suivant le plan général de la joue 2. Elle est délimitée par une découpe en U. Le côté par lequel la patte à plier 48 est rattachée au reste de la joue 42 est orienté suivant la direction transversale de la joue 42.

Le long du grand côté transversal de la joue 42 sont disposés successivement, si l'on part de la paroi de support 40, une griffe 46, la patte à plier 48, l'autre griffe 46 et l'ergot 47.

La distance entre les deux griffes 46 est un multiple du pas entre les ouvertures 20 du rail 11. Ici, la distance entre les deux griffes 46 est de deux fois le pas de la série d'ouvertures 20.

La deuxième console 13 et le rail porteur 11 sont configurés pour être fixés l'un à l'autre avec la face de la joue 42 dont saillent les griffes 46 qui est contre la face externe de la paroi latérale 16 de l'une des ailes 15, avec chacune des griffes 46 qui est engagée dans une ouverture 20, ainsi que montré sur les figures 2 à 4.

Lorsque la deuxième console 13 est fixée au rail porteur 11, la première paroi 49 de chaque griffe 46 passe au travers d'une ouverture 20 et la deuxième paroi 50 de chaque griffe 46 est en regard de la face interne de la paroi latérale 16 de l'aile 15 contre laquelle est disposée la deuxième console 13.

Comme on le voit bien sur la figure 4, la patte à plier 48 est alors au droit de l'ouverture 20 qui se trouve entre les deux ouvertures 20 recevant une griffe 46 tandis que l'ergot 47 est engagé dans l'ouverture 20 située sous la griffe 46 la plus basse.

Si l'on désire verrouiller complètement la deuxième console 13 sur le rail porteur 12, on plie la patte 48 pour l'engager dans l'ouverture 20 au droit de laquelle elle se trouve.

Ainsi qu'indiqué ci-dessus, les ouvertures 20 du rail porteur 11 ont toutes le même contour, que l'on va maintenant décrire à l'appui de la figure 5.

Le contour de chaque ouverture 20 comporte un premier côté 51 et un deuxième côté 52 chacun orienté transversalement à la direction générale du rail 11, le premier côté 51 et le deuxième côté 52 étant en regard l'un de l'autre.

Le contour de chaque ouverture 20 comporte également un troisième côté 53 et un quatrième côté 54 chacun orienté suivant la direction générale du rail 11, le troisième côté et le quatrième côté étant en regard l'un de l'autre.

Ainsi, chaque ouverture 20 présente un contour à quatre côtés 51 à 54, le troisième côté 53 s'étendant entre une extrémité du premier côté 51 et une extrémité du deuxième côté 52 tandis que le quatrième côté 54 s'étend entre l'autre extrémité du premier côté 51 et l'autre extrémité du deuxième côté 52.

Le premier côté 51 et le deuxième côté 52 comportent chacun un segment 55 qui est incurvé concave et deux segments 56 et 57 qui sont disposés de part et d'autre du segment 55.

Le segment 55 du premier côté 51 et le segment 55 du deuxième côté 52 suivent chacun un arc d'un même cercle dont le diamètre est le même que celui des ouvertures 30 de la première console 12 et du corps 32 des goupilles 31.

Les segments 56 et 57 du premier côté 51 sont droits et alignés.

Ici, les segments 56 et 57 du deuxième côté 52 sont également droits et alignés.

Ici également, le troisième côté 53 et le quatrième côté 54 sont droits.

Pour chaque goupille 31, la surface 60 du corps 32 forme une surface d'appui sur le pourtour d'une ouverture 20 du rail 11.

Ainsi qu'on le voit sur la figure 6, lorsqu'une ouverture 20 reçoit une goupille 31, la surface 60 est au contact du pourtour de l'ouverture 20 par le segment 55 du premier côté 51 et par le segment 55 du deuxième côté 52.

Pour chaque griffe 46, la surface 61 de la première paroi 49 située du côté de la deuxième paroi 50 forme une surface d'appui sur le pourtour de l'ouverture 20. La surface 61 est plate.

Le premier côté 51 de l'ouverture 20 a une longueur légèrement plus grande que la longueur de la surface 61 des griffes 46, qui correspond à la largeur des griffes 46.

Comme on le voit sur la figure 7, lorsqu'une ouverture 20 reçoit une griffe 46, la surface 61 de cette griffe est au contact du premier côté 51 par les segments 56 et 57 disposés de part et d'autre du segment 55.

Ainsi, chaque ouverture 20 du rail porteur 11 peut recevoir aussi bien un organe mâle de fixation de la première console 12, c'est-à-dire une goupille 31, qu'un organe mâle de fixation de la deuxième console 13, c'est-à-dire une griffe 46.

On notera que dans les systèmes conventionnels, pour les consoles dont l'organe de fixation est une goupille on prévoit un premier rail porteur dont les ouvertures ont un contour circulaire et on prévoit un deuxième rail dont les ouvertures ont un contour rectangulaire pour les consoles dont l'organe mâle de fixation est une griffe.

Avec le rail porteur 11 :
- pour les goupilles 31, le contact entre la surface 60 et le pourtour de l'ouverture se fait uniquement sur les segments 55 incurvés concaves du premier côté 51 et du deuxième côté 52, alors que dans le rail conventionnel à ouvertures circulaires, le contact s'effectue sur la totalité du pourtour de l'ouverture ; et
- pour les griffes 46, le contact entre la surface 61 et le pourtour de l'ouverture se fait uniquement sur les segments 56 et 57 situés de part et d'autre du segment 55 incurvé concave du premier côté 51, alors que dans le rail conventionnel à ouvertures rectangulaires, le contact s'effectue sur la totalité de la surface 61.

Ainsi, ni les goupilles 31 ni les griffes 46 ne coopèrent avec le pourtour des ouvertures 20 de la même façon qu'avec les ouvertures circulaires ou les ouvertures rectangulaires des rails antérieurs.

Il se trouve néanmoins, même si cela peut paraître surprenant, que le contact seulement partiel de la surface 60 avec le pourtour de l'ouverture 20 ou que le contact seulement partiel de la surface 61 avec le premier côté 51 suffit pour permettre aux goupilles 31 ou aux griffes 46 de jouer leur rôle de fixation, y compris pour permettre la reprise par le rail porteur 11 des efforts s'exerçant sur la première console 12 ou sur la deuxième console 13.

En ce qui concerne l'ergot 47 de la deuxième console 13, il coopère avec le pourtour de l'ouverture 20 dans laquelle il est disposé exactement de la même façon que la première paroi 49 des griffes 46.

Lorsque la patte 48 est pliée pour être engagée dans une ouverture 20, elle complète le verrouillage de la deuxième console 13 en empêchant son déplacement vers le haut, la patte pliée 48 venant au contact du deuxième côté 52, et plus précisément, en principe, contre le segment 57 du deuxième côté 52 se trouvant vers les retours 17.

On observera que lorsque la première console 12 est fixée sur le rail porteur 11, les deux goupilles 31 sont distantes, tout comme les ouvertures 30, d'un multiple n du pas entre les ouvertures 20 ; et il est rappelé que dans la deuxième console 13, les griffes 46 sont distantes l'une de l'autre d'un multiple m du pas entre les ouvertures 20 ; avec ici le multiple n qui est différent du multiple m (dans l'exemple illustré, le multiple n est égal à 3 et le multiple m est égal à 2).

Ainsi, il y a une corrélation entre le pas entre les ouvertures 20, la distance entre les goupilles 31 et la distance entre les griffes 46.

On notera que le système 10 montré sur les figures 1 à 4 illustre la capacité du rail 11 à coopérer aussi bien avec une première console 12 qu'avec une deuxième console 13 ; et que bien entendu en pratique le rail 11 est utilisable avec uniquement des premières consoles 12 ou uniquement des deuxièmes consoles 13.

Le rail porteur 11 illustré sur les figures 8 et 9 est identique au rail porteur 11 illustré sur les figures 1 à 4, si ce n'est que la tranche du bord tombé 19 de chaque retour 17 est crantée ; et que chaque paroi latérale 16 présente un léger renfoncement au niveau de la série d'ouvertures 20.

Plus précisément, chaque paroi latérale 16 comporte une portion inclinée 65 au niveau des segments 56 et 57 du pourtour des ouvertures 20 et une portion 66 parallèle au plan général de la paroi latérale 16 au niveau des segments incurvés concaves 55 du pourtour des ouvertures 20, avec chaque portion 65 qui est inclinée vers la portion 66 et vers l'intérieur du rail porteur 11.

Dans des variantes du système 10 non illustrées :
- le nombre d'organes mâles de fixation de la première console telle que 12 et de la deuxième console telle que 13 est différent de deux, par exemple un ou trois ;
- la goupille 31 est remplacée par un autre organe mâle de fixation comportant une surface d'appui, sur le pourtour du rail, à section circulaire de diamètre prédéterminé, par exemple une vis ;
- la griffe 46 est remplacée par un autre organe mâle de fixation présentant une surface d'appui sur le pourtour de l'ouverture du rail, qui est plate, par exemple un crochet ;
- la première console telle que 12 est agencée différemment, par exemple avec une section globalement en L comme la deuxième console 13 ;
- la deuxième console telle que 13 est agencée différemment, par exemple avec une section en U comme la première console 12 ;
- le rail 11 est agencé différemment, par exemple avec une section différente telle qu'une section en G ; et/ou avec une seule paroi qui a une série d'ouvertures telles que 20 ou alors davantage que deux parois qui ont une série d'ouvertures telles que 20 ; et/ou
- les ouvertures telles que 20 ont un contour différent, par exemple avec le troisième côté 53, le quatrième côté 54, le segment 56 et/ou le segment 57 qui ont une forme incurvée.

De nombreuses autres variantes sont possibles en fonction des circonstances, et l'on rappelle à cet égard que l'invention ne se limite pas aux exemples décrits et représentés.

## Revendications

1. Système pour fournir un support horizontal à un objet tel qu'un chemin de câbles, comportant un rail porteur (11) et une console présentant une portion configurée pour former ledit support horizontal lorsqu'elle est fixée audit rail porteur (11) lui-même fixé verticalement sur une structure telle qu'un mur, ledit rail porteur comportant une paroi (16) présentant une série d'ouvertures (20) disposées le long dudit rail (11) selon un pas régulier, chaque dite ouverture (20) étant configurée pour recevoir un organe mâle de fixation de ladite console comportant une surface d'appui (60), sur le pourtour de l'ouverture (20) du rail (11), qui est à section circulaire de diamètre prédéterminé **caractérisé en ce que** :
- ledit système (10) comporte des dits organes mâles de fixation (31), appelés ci-après premiers organes mâles de fixation (31), pour des premières dites consoles (12) et des deuxièmes organes mâles de fixation (46), pour des deuxièmes dites consoles (13) ;
- chaque dit deuxième organe mâle de fixation (46) présente une surface d'appui (61), sur le pourtour de l'ouverture (20) du rail (11), qui est plate de longueur prédéterminée ; et
- chaque dite ouverture (20) du rail (11) présente un contour comportant un premier côté (51) et un deuxième côté (52) chacun orienté transversalement à la direction générale du rail (11), le premier côté (51) et le deuxième côté (52) étant en regard l'un de l'autre et comportant chacun un segment incurvé concave (55) et deux segments (56, 57) disposés de part et d'autre du segment incurvé concave (55), le segment incurvé concave (55) du premier côté (51) et le segment incurvé concave (55) du deuxième côté (52) suivant chacun un arc d'un même cercle ayant ledit diamètre prédéterminé, les segments (56, 57) du premier côté (51) disposés de part et d'autre du segment incurvé concave (55) étant droits et alignés, avec le premier côté (51) qui a une longueur au moins égale à ladite longueur prédéterminée, grâce à quoi chaque dite ouverture (20) du rail (11) peut recevoir aussi bien un dit premier organe mâle de fixation (31) qu'un dit deuxième organe mâle de fixation (46).

2. Système selon la revendication 1, **caractérisé en ce que** chaque dite ouverture (20) comporte également un troisième côté (53) et un quatrième côté (54) chacun orienté suivant la direction générale du rail (11), le troisième côté (53) et le quatrième côté (54) étant en regard l'un de l'autre, avec le troisième côté (53) qui s'étend entre une extrémité du premier côté (51) et une extrémité du deuxième côté (52) et avec le quatrième côté (54) qui s'étend entre l'autre extrémité du premier côté (51) et l'autre extrémité du deuxième côté (52).

3. Système selon l'une quelconque des revendications 1 ou 2, **caractérisé en ce que** dans ledit deuxième côté (52), les deux segments (56, 57) disposés de part et d'autre du segment incurvé concave (55) sont droits et alignés.

4. Système selon l'une quelconque des revendications 1 à 3, **caractérisé en ce qu'**il comporte pour chaque dite première console (12), deux dits premiers organes mâles de fixation (31) distants d'un multiple n du pas entre lesdites ouvertures (20) dudit rail (1) tandis qu'il comporte pour chaque dite deuxième console (13) deux dits organes mâles de fixation (43) distants l'un de l'autre d'un multiple m du pas entre lesdites ouvertures (20) dudit rail porteur (11), avec ledit multiple n qui est différent dudit multiple m.

5. Système selon la revendication 4, **caractérisé en ce que** ledit multiple n est égal à 3 et ledit multiple m est égal à 2.

6. Système selon l'une quelconque des revendications 1 à 5, **caractérisé en ce que** ladite première console (12) comporte deux flasques (28) chacun muni d'une ouverture (30) de réception d'un dit premier organe mâle de fixation (31) ; avec le rail porteur (11) et la première console (12) qui sont configurés pour que le rail porteur (11) puisse s'engager entre lesdits flasques (28) et que chaque dite ouverture (30) de chaque flasque (28) soit alignée avec une dite ouverture (20) du rail porteur (11).

7. Système selon l'une quelconque des revendications 1 à 6, **caractérisé en ce que** ladite deuxième console (13) comporte deux dits deuxièmes organes mâles de fixation (46) qui sont à section en L avec une première paroi (49) et une deuxième paroi (50) disposées transversalement l'une par rapport à l'autre, ladite surface d'appui (61) étant formée par la surface de ladite première paroi (49) située du côté de ladite deuxième paroi (50), la deuxième console (13) et le rail porteur (11) étant configurés pour être fixés l'un à l'autre avec ladite première paroi (49) qui passe au travers d'une dite ouverture (20) du rail porteur (11) et la deuxième paroi (50) qui est en regard de la face interne de ladite paroi (16) du rail porteur (11) présentant lesdites ouvertures (20).

8. Rail porteur comportant une paroi (16) présentant une série d'ouvertures (20) disposées le long dudit rail (11) selon un pas régulier, chaque dite ouverture (20) étant configurée pour recevoir un organe mâle de fixation d'une console comportant une surface d'appui (60), sur le pourtour de l'ouverture (20) du rail (11), qui est à section circulaire de diamètre prédéterminé **caractérisé en ce que** chaque dite ouverture dudit (20) du rail (11) présente un contour comportant un premier côté (51) et un deuxième côté (52) chacun orienté transversalement à la direction générale du rail, le premier côté (51) et le deuxième côté (52) étant en regard l'un de l'autre et comportant chacun un segment incurvé concave (55) et deux segments (56, 57) disposés de part et d'autre du segment incurvé concave (55), le segment incurvé concave (55) du premier côté (51) et le segment incurvé concave (55) du deuxième côté (52) suivant chacun un arc d'un même cercle ayant ledit diamètre prédéterminé, les segments (56, 57) du premier côté (51) disposés de part et d'autre du segment incurvé concave (55) étant droits et alignés, grâce à quoi chaque dite ouverture (20) du rail (11) peut recevoir aussi bien un premier organe mâle de fixation (31) comportant une surface d'appui (60), sur le pourtour de l'ouverture (20) du rail (11), qui est à section circulaire dudit diamètre prédéterminé, qu'un deuxième organe mâle de fixation (46) présentant une surface d'appui (61), sur le pourtour de l'ouverture (20) du rail (11), qui est plate.

9. Rail porteur selon la revendication 8, **caractérisé en ce qu'**il comporte deux dites parois (16) présentant une dite série d'ouverture (20), chaque ouverture (20) de l'une des dites paroi (16) étant alignée avec une ouverture (20) de l'autre paroi (16).

10. Rail porteur selon la revendication 9, **caractérisé en ce qu'**il est formé par un profilé métallique à section en U comportant un fond (14) et lesdites deux parois (16) chacune raccordée par un côté longitudinal à un côté longitudinal respectif dudit fond (14).

## Patentansprüche

1. System zum Bereitstellen einer horizontalen Auflage für einen Gegenstand wie etwa eine Kabelwanne, mit einer Tragschiene (11) und einem Träger, der ein Stück aufweist, das zum Bilden der horizontalen Auflage ausgebildet ist, wenn er an der Tragschiene (11) befestigt ist, die ihrerseits vertikal an einer Struktur wie etwa einer Mauer befestigt ist, wobei die Tragschiene eine Wand (16) mit einer Reihe von Öffnungen (20) aufweist, die entlang der Schiene (11) in gleichmäßigem Abstand angeordnet sind, wobei jede Öffnung (20) zur Aufnahme eines Befestigungssteckelements des Trägers ausgebildet ist, das eine Fläche (60) zur Auflage am Umfangsrand der Öffnung (20) der Schiene (11) aufweist, die einen runden Querschnitt mit vorbestimmtem Durchmesser hat,
**dadurch gekennzeichnet, dass**
- das System (10) Befestigungssteckelemente (31), nachstehend als erste Befestigungssteckelemente (31) bezeichnet, für erste Träger (12) und zweite Befestigungssteckelemente (46) für zweite Träger (13) umfasst;
- jedes zweite Befestigungssteckelement (46) eine Fläche (61) zur Auflage am Umfangsrand der Öffnung (20) der Schiene (11) aufweist, die eben mit vorbestimmter Länge ist; und
- jede Öffnung (20) der Schiene (11) einen Umriss mit einer ersten Seite (51) und einer zweiten Seite (52) aufweist, die jeweils quer zur allgemeinen Richtung der Schiene (11) ausgerichtet sind, wobei die erste Seite (51) und die zweite Seite (52) einander gegenüberliegend angeordnet sind und jeweils ein konkav gebogenes Segment (55) und zwei beidseits des konkav gebogenen Segments (55) angeordnete Segmente (56, 57) aufweisen, wobei das konkav gebogene Segment (55) der ersten Seite (51) und das konkav gebogene Segment (55) der zweiten Seite (52) jeweils einem Bogen ein und desselben Kreises folgen, der den vorbestimmten Durchmesser aufweist, wobei die beidseits des konkav gebogenen Segments (55) angeordneten Segmente (56, 57) der erste Seite (51) gerade und fluchtend ausgerichtet sind, wobei die erste Seite (51) eine Länge aufweist, die wenigstens der vorbestimmten Länge entspricht, wodurch jede Öffnung (20) der Schiene (11) sowohl ein erstes Befestigungssteckelement (31) als auch ein zweites Befestigungssteckelement (46) aufnehmen kann.

2. System nach Anspruch 1,
**dadurch gekennzeichnet, dass** jede Öffnung (20) auch eine dritte Seite (53) und eine vierte Seite (54) aufweist, die jeweils in der allgemeinen Richtung der Schiene (11) ausgerichtet sind, wobei die dritte Seite (53) und die vierte Seite (54) einander gegenüberliegend angeordnet sind, wobei die dritte Seite (53) zwischen einem Ende der ersten Seite (51) und einem Ende der zweiten Seite (52) verläuft und wobei die vierte Seite (54) zwischen dem anderen Ende der ersten Seite (51) und dem anderen Ende der zweiten Seite (52) verläuft.

3. System nach einem der Ansprüche 1 oder 2,
**dadurch gekennzeichnet, dass** die zwei beidseits des konkav gebogenen Segments (55) angeordneten Segmente (56, 57) auf der zweiten Seite (52) gerade und fluchtend ausgerichtet sind.

4. System nach einem der Ansprüche 1 bis 3,
**dadurch gekennzeichnet, dass** es für jeden ersten Träger (12) zwei erste Befestigungssteckelemente (31) umfasst, die um ein Vielfaches n des Abstands zwischen den Öffnungen (20) der Schiene (11) beabstandet sind, während es für jeden zweiten Träger (13) zwei Befestigungssteckelemente (43) umfasst, die voneinander um ein Vielfaches m des Abstands zwischen den Öffnungen (20) der Tragschiene (11) beabstandet sind, wobei sich das Vielfache n von dem Vielfachen m unterscheidet.

5. System nach Anspruch 4,
**dadurch gekennzeichnet, dass** das Vielfache n gleich 3 ist und das Vielfache m gleich 2 ist.

6. System nach einem der Ansprüche 1 bis 5,
**dadurch gekennzeichnet, dass** der erste Träger (12) zwei Seitenteile (28) aufweist, die jeweils mit einer Öffnung (30) zur Aufnahme eines ersten Befestigungssteckelements (31) versehen sind, wobei die Tragschiene (11) und der Träger (12) so ausgebildet sind, dass die Tragschiene (11) zwischen die Seitenteile (28) eingeführt werden kann und jede Öffnung (30) eines jeden Seitenteils (28) mit einer Öffnung (20) der Tragschiene (11) fluchtend ausgerichtet ist.

7. System nach einem der Ansprüche 1 bis 6,
**dadurch gekennzeichnet, dass** der zweite Träger (13) zwei zweite Befestigungssteckelemente (46) aufweist, die einen L-förmigen Querschnitt mit einer ersten Wand (49) und einer zweiten Wand (50) haben, die zueinander quer verlaufend angeordnet sind, wobei die Auflagefläche (61) durch die Fläche der auf der Seite der zweiten Wand (50) gelegenen ersten Wand (49) gebildet ist, wobei der zweite Träger (13) und die Tragschiene (11) so ausgebildet sind, dass sie aneinander befestigt werden, wobei die erste Wand (49) durch eine Öffnung (20) der Tragschiene (11) hindurch verläuft und die zweite Wand (50) der Innenseite der mit den Öffnungen (20) versehenen Wand (16) der Tragschiene (11) gegenüberliegt.

8. Tragschiene mit einer Wand (16), die eine Reihe von Öffnungen (20) aufweist, die entlang der Schiene (11) in gleichmäßigem Abstand angeordnet sind, wobei jede Öffnung (20) zur Aufnahme eines Befestigungssteckelements eines Trägers ausgebildet ist, das eine Fläche (60) zur Auflage am Umfangsrand der Öffnung (20) der Schiene (11) aufweist, die einen runden Querschnitt mit vorbestimmtem Durchmesser hat,
**dadurch gekennzeichnet, dass** jede Öffnung (20) der Schiene (11) einen Umriss mit einer ersten Seite (51) und einer zweiten Seite (52) aufweist, die jeweils quer zur allgemeinen Richtung der Schiene ausgerichtet sind, wobei die erste Seite (51) und die zweite Seite (52) einander gegenüberliegend angeordnet sind und jeweils ein konkav gebogenes Segment (55) und zwei beidseits des konkav gebogenen Segments (55) angeordnete Segmente (56, 57) aufweisen, wobei das konkav gebogene Segment (55) der ersten Seite (51) und das konkav gebogene Segment (55) der zweiten Seite (52) jeweils einem Bogen ein und desselben Kreises folgen, der den vorbestimmten Durchmesser aufweist, wobei die beidseits des konkav gebogenen Segments (55) angeordneten Segmente (56, 57) der ersten Seite (51) gerade und fluchtend ausgerichtet sind, wodurch jede Öffnung (20) der Schiene (11) sowohl ein erstes Befestigungssteckelement (31), das eine Fläche (60) zur Auflage am Umfangsrand der Öffnung (20) der Schiene (11) aufweist, die einen runden Querschnitt mit dem vorbestimmten Durchmesser hat, als auch ein zweites Befestigungssteckelement (46), das eine Fläche (61) zur Auflage am Umfangsrand der Öffnung (20) der Schiene (11) aufweist, die eben ist, aufnehmen kann.

9. Tragschiene nach Anspruch 8,
**dadurch gekennzeichnet, dass** sie zwei Wände (16) mit einer Reihe Öffnungen (20) umfasst, wobei jede Öffnung (20) der einen Wand (16) mit einer Öffnung (20) der anderen Wand (16) fluchtend ausgerichtet ist.

10. Tragschiene nach Anspruch 9,
**dadurch gekennzeichnet, dass** sie durch ein Metallprofil mit U-förmigem Querschnitt gebildet ist, das einen Boden (14) und die beiden Wände (16) umfasst, die jeweils durch eine Längsseite mit einer entsprechenden Längsseite des Bodens (14) verbunden sind.

## Claims

1. System for providing a horizontal support for an object such as a cable tray, comprising a carrier rail (11) and a bracket having a portion configured to form said horizontal support when fastened to said carrier rail (11), itself vertically fastened to a structure such as a wall, said carrier rail comprising a wall (16) having a series of apertures (20) arranged at regular spacings along said rail (11), each of said apertures (20) being configured to receive a male fastening member of said bracket, which member comprises a bearing surface (60), for bearing on the perimeter of the aperture (20) in the rail (11), which has a circular cross section of a predetermined diameter, **characterised in that**:
- said system (10) comprises said male fastening members (31), referred to hereinafter as first male fastening members (31), for first said brackets (12), and second male fastening members (46) for second said brackets (13);
- each of said second male fastening members (46) has a bearing surface (61), for bearing on the perimeter of the aperture (20) in the rail (11), which is planar and of a predetermined length; and
- each of said apertures (20) in the rail (11) has a contour comprising a first side (51) and a second side (52) which are each oriented transversely to the general direction of the rail (11), the first side (51) and the second side (52) opposing each other and each comprising a concave curved segment (55) and two segments (56, 57) arranged on either side of the concave curved segment (55), the concave curved segment (55) of the first side (51) and the concave curved segment (55) of the second side (52) each following one arc of the same circle having said predetermined diameter, the segments (56, 57) of the first side (51) arranged on either side of the concave curved segment (55) being straight and aligned, the first side (51) having a length at least equal to said predetermined length, due to which each of said apertures (20) in the rail (11) can either receive one said first male fastening member (31) or one said second male fastening member (46).

2. System according to claim 1, **characterised in that** each of said apertures (20) also comprises a third side (53) and a fourth side (54) which are each oriented in the general direction of the rail (11), the third side (53) and the fourth side (54) opposing each other, the third side (53) extending between an end of the first side (51) and an end of the second side (52), and the fourth side (54) extending between the other end of the first side (51) and the other end of the second side (52).

3. System according to either claim 1 or claim 2, **characterised in that**, in said second side (52), the two segments (56, 57) arranged on either side of the concave curved segment (55) are straight and aligned.

4. System according to any of claims 1 to 3, **characterised in that** it comprises, for each said first brackets (12), two said first male fastening members (31) which are separated by a multiple n of the spacing between said apertures (20) in said rail (1), whereas the system comprises, for each said second brackets (13), two said male fastening members (43) which are separated from one another by a multiple m of the spacing between said apertures (20) in said carrier rail (11), said multiple n being different from said multiple m.

5. System according to claim 4, **characterised in that** said multiple n is equal to 3 and said multiple m is equal to 2.

6. System according to any of claims 1 to 5, **characterised in that** said first bracket (12) comprises two flanges (28) which are each provided with an aperture (30) for receiving one said first male fastening member (31), the carrier rail (11) and the first bracket (12) being configured such that the carrier rail (11) can be inserted between said flanges (28) and such that each of said apertures (30) in each flange (28) is aligned with one said aperture (20) in the carrier rail (11).

7. System according to any of claims 1 to 6, **characterised in that** said second bracket (13) comprises two said second male fastening members (46) which are L-shaped in cross section and have a first wall (49) and a second wall (50) arranged transversely relative to each other, said bearing surface (61) being formed by the surface of said first wall (49) located at the side of said second wall (50), the second bracket (13) and the carrier rail (11) being configured so as to be fastened to each other, said first wall (49) passing through one said aperture (20) in the carrier rail (11) and the second wall (50) opposing the inner surface of said wall (16) of the carrier rail (11) having said apertures (20).

8. Carrier rail comprising a wall (16) having a series of apertures (20) arranged at regular spacings along said rail (11), each of said apertures (20) being configured to receive a male fastening member of a bracket, which member comprises a bearing surface (60), for bearing on the perimeter of the aperture (20) in the rail (11), which has a circular cross section of a predetermined diameter, **characterised in that** each of said apertures (20) in the rail (11) has a contour comprising a first side (51) and a second side (52) which are each oriented transversely to the general direction of the rail, the first side (51) and the second side (52) opposing each other and each comprising a concave curved segment (55) and two segments (56, 57) arranged on either side of the concave curved segment (55), the concave curved segment (55) of the first side (51) and the concave curved segment (55) of the second side (52) each following one arc of the same circle having said predetermined diameter, the segments (56, 57) of the first side (51) arranged on either side of the concave curved segment (55) being straight and aligned, due to which each of said apertures (20) in the rail (11) can receive either a first male fastening member (31) comprising a bearing surface, (60) for bearing on the perimeter of the aperture (20) in the rail (11), which has a circular cross section of said predetermined diameter, or a second male fastening member (46) having a planar bearing surface (61), for bearing on the perimeter of the aperture (20) in the rail (11).

9. Carrier rail according to claim 8, **characterised in that** it comprises two said walls (16) having one said series of apertures (20), each aperture (20) in one of said walls (16) being aligned with an aperture (20) in the other wall (16).

10. Carrier rail according to claim 9, **characterised in that** it is formed by a metal profile having a U-shaped cross section and comprising a bottom (14) and said two walls (16) which are each connected by a longitudinal edge to a respective longitudinal edge of said bottom (14).
